Europäisches Patentamt

European Patent Office

Office européen des brevets

(19)

(11) Numéro de publication: **0 202 439**

**A1**

(12) **DEMANDE DE BREVET EUROPEEN**

(21) Numéro de dépôt: **86104500.3**

(22) Date de dépôt: **02.04.86**

(51) Int. Cl.⁴: **F 16 J 15/32**

(30) Priorité: **18.04.85 FR 8505896**

(43) Date de publication de la demande:
**26.11.86 Bulletin 86/48**

(84) Etats contractants désignés:
**BE DE FR GB IT**

(71) Demandeur: **Electra-Unic-Industrie**
**21, Rue Gambetta B.P. 5**
**F-95301 Cergy-Pontoise(FR)**

(72) Inventeur: **Pasquier, Francois**
**19 Rue Gambetta**
**F-95301 Cergy-Pontoise(FR)**

(74) Mandataire: **Casalonga, Axel et al,**
**BUREAU D.A. CASALONGA OFFICE JOSSE & PETIT**
**Morassistrasse 8**
**D-8000 München 5(DE)**

(54) Joint d'etancheite annulaire composite.

(57) Joint d'étanchéité composite comprenant deux bagues coaxiales dont l'une, formant bague d'étanchéité, est réalisée en un matériau élastique et l'autre, formant bague de frottement, est réalisée en un matériau rigide.

La surface de la bague rigide (6) en contact avec la bague élastique présente des évidements (7) en fer de lance à base en forme de losange et des saillies (9) sur les bords des évidements.

Application: à l'étanchéité entre un organe fixe et un organe mobile en translation et/ou en rotation.

FIG.1

FIG.2

EP 0 202 439 A1

1

### Joint d'étanchéité annulaire composite.

La présente invention se rapporte à un joint d'étanchéité composite destiné à être monté entre un organe fixe et un organe mobile en translation et/ou en rotation par rapport à l'organe fixe, du type comprenant deux bagues coaxiales dont l'une, formant bague d'étanchéité, réalisée en un matériau élastique déformable, est destinée à entrer en contact avec l'organe fixe, tandis que l'autre, formant bague de frottement, est réalisée en un matériau rigide, présentant un faible coefficient de frottement, et est destinée à rentrer en contact avec l'organe mobile, la surface de la bague rigide en contact avec la bague élastique présentant des évidements dans lesquels le matériau élastique peut fluer lors du serrage du joint d'étanchéité.

Des joints d'étanchéités de ce type sont connus par exemple par les brevets français n° 1 525 848 et 2 138 311.

Il s'avère toutefois que les joints composites connus ne donnent pas toujours entière satisfaction dans la pratique, notamment lorsque le joint est soumis à des sollicitations sévères.

La présente invention a pour objet un joint d'étanchéité composite du type défini ci-dessus, remédiant aux inconvénients des joints composites connus.

Sur le joint composite conforme à l'invention, du type défini ci-dessus, la surface de la bague rigide en contact avec la bague élastique présente des évidements ayant une forme générale en fer de lance, avec une base en forme de losange, et des saillies sur les bords desdits évidements.

Cette conformation de la bague rigide présente l'avantage, par rapport à une bague avec des évidements circulaires ou ayant d'autres formes polygonales, par exemple une forme carrée, non seulement de permettre une pénétration plus aisée, dans la surface de la bague, des pointes servant à la réalisation des évidements, mais encore de donner lieu à un refoulement accru de matière sur les côtés des évidements, d'où la formation de saillies marquées, ce qui procure à la bague élastique un ancrage amélioré sur la bague rigide.

Les évidements en forme de losange peuvent être avantageusement orientés de manière que la grande diagonale des losanges soit orientée perpendiculairement à la direction du mouvement relatif des deux organes entre lesquels est monté le joint, c'est-à-dire axialement dans le cas d'un mouvement de rotation et circonférentiellement dans le cas d'un mouvement de translation.

En effet, c'est perpendiculairement à la grande diagonale que les évidements en forme de losanges et les saillies sur les bords de ces évidements procurent le meilleur effet d'ancrage.

De préférence, les évidements sont prévus sur la bague rigide en quinconce sur au moins deux lignes de manière à laisser subsister deux marges latérales démunies d'évidements.

Suivant un mode de réalisation particulièrement préféré, les évidements sont disposés en quinconce suivant trois lignes, avec une ligne médiane équidistante des bords latéraux.

Les évidements en forme de losanges peuvent également être pratiqués dans la bague rigide de manière que la grande diagonale des losanges soit orientée suivant l'axe du joint. Cela facilite le montage du joint composite qui se fait, de façon usuelle, par mise en place d'abord de la bague souple dans une gorge de réception et par emmanchement subséquent de la bague rigide sur ou dans la bague élastique, selon qu'il s'agit d'un "montage mâle" (la bague rigide tournée vers l'extérieur) ou d'un "montage femelle" (la bague rigide tournée vers l'intérieur).

En se référant aux dessins annexés, on va décrire ci-après, plus en détail, un mode de réalisation illustratif et non limitatif de l'objet de l'invention; sur les dessins :

la figure 1 est une demi-coupe axiale d'un joint composite conforme à l'invention, en montage femelle entre deux organes;

la figure 2 montre, à plus grande échelle, une partie de la surface extérieure de la bague rigide du joint composite de la figure 1;

la figure 3 est une coupe suivant III-III de la figure 2, à plus grande échelle, montrant le profil d'un évidement et des saillies sur les bords de cet évidement;

la figure 4 est une coupe correspondant à celle de la figure 1, du montage mâle d'un joint composite conforme à l'invention.

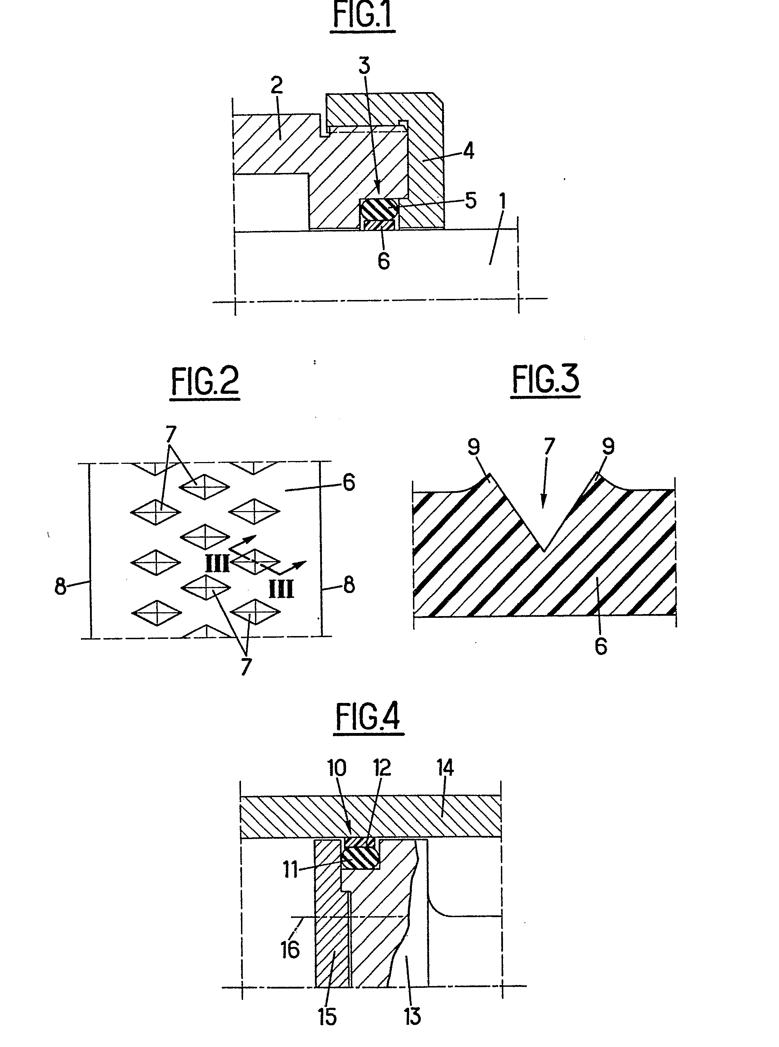

Selon la figure 1, l'étanchéité entre une tige ou un arbre 1 animé d'un mouvement de translation et/ou d'un mouvement de rotation, et un carter 2, est assurée par un joint composite 3 monté dans une gorge dont le fond et un flanc sont délimités par le carter 2 et dont l'autre flanc est délimité par un couvercle 4 vissé sur le carter 2.

Le joint composite 3 se compose d'une bague extérieure 5 en matériau élastique (élastomère) et d'une bague intérieure 6 en matériau rigide (plastomère). Les deux bagues 5 et 6 sont montées sans serrage axial dans la gorge, alors que la bague élastique 5 se trouve comprimée radialement par la tige ou arbre 1, par l'intermédiaire de la bague 6 en contact avec la tige ou arbre 1.

Les deux bagues 5 et 6 sont avantageusement montées séparément dans la gorge, d'abord la bague souple 5 et ensuite la bague rigide 6. Pour assurer, en position de fonctionnement du joint composite, un ancrage des deux bagues 5 et 6 l'une à l'autre qui empêche avec certitude toute translation et/ou rotation de la bague rigide 6, en contact de frottement avec la tige ou arbre 1, par rapport à la bague souple 5 en contact avec le fond de la gorge du carter 2, la bague 6 comporte, selon les figures 2 et 3, sur sa face tournée vers la bague souple 5, des évidements 7 en forme de fer de lance, à base en forme de losange.

Comme le montre la figure 2, les évidements 7 sont disposés en quinconce sur trois lignes, la ligne médiane étant équidistante des deux bords 8 de la bague 6. La grande diagonale des losanges est parallèle à l'axe de la bague 6.

Les évidements 7 sont ménagés dans la bague 6 à l'aide d'un outil tel qu'une molette à pointes en fer de lance, de telle manière que lors de l'enfoncement des pointes de l'outil dans la bague 6, de la matière soit refoulée par les pointes sur les quatre côtés du losange, pour former ici des saillies 9 visibles notamment sur la figure 3.

Il y a lieu de noter que les saillies 9 se forment principalement sur les côtés des évidements 7 en losange, alors qu'elles sont moins marquées aux angles des évidements 7. En d'autres termes, chaque évidement 7 n'est pas entouré par une saillie 9 continue, uniforme, mais comporte au contraire, plutôt quatre saillies 9 plus ou moins séparées les unes des autres.

Ces saillies 9 procurent à la bague souple 5 un meilleur ancrage sur la bague rigide 6 que si cette dernière comportait uniquement les évidements 7 dans lesquels la matière de la bague 5 flue lors du serrage du joint, c'est-à-dire lors du montage du joint composite dans sa gorge.

La figure 4 illustre un joint composite conforme à l'invention à montage mâle. Un joint 10 comprenant une bague intérieure 11 en matériau élastique et une bague extérieure 12 en matériau rigide, est ici monté dans une gorge extérieure d'une pièce circulaire 13, par exemple un piston ou une tige de piston mobile en translation et/ou en rotation dans un cylindre 14. Un flanc et le fond de cette gorge sont définis par la pièce 13, tandis que le flanc opposé est défini par un couvercle 15 fixé par exemple à l'aide de vis dont seuls les axes 16 sont représentés.

La bague extérieure rigide 12 se trouve ainsi en contact avec la face intérieure du cylindre 14 et la bague intérieure 11 souple est comprimée entre la face intérieure de la bague 12 et le fond de la gorge. Des évidements entourés de saillies, analogues aux évidements 7 avec saillies 9 des figures 2 et 3, sont ici prévus sur la face intérieure de la bague 12, pour améliorer l'ancrage de la bague 11 à la bague 12.

Les évidements en fer de lance, à base en forme de losange, présentent avantageusement les rapports de dimensions suivants :

petite diagonale $<$ profondeur $<$ grande diagonale.

Des rapports de dimensions préférés sont :

petite diagonale = 0,5 x grande diagonale

profondeur = 0,75 x grande diagonale.

Un joint conforme à l'invention ayant donné des résultats très favorables comprend, dans la face de sa bague rigide en contact avec la bague souple, des évidements 7 en fer de lance, avec une base ayant la forme d'un losange dont la grande diagonale est de 0,4 mm, la petite diagonale de 0,2 mm et la profondeur de 0,3 mm. Chaque évidement 7 est entouré d'une saillie 9 dont la hauteur est comprise entre 0,08 mm à l'endroit des pointes et 0,12 mm au milieu des quatre côtés du losange.

Selon l'utilisation envisagée du joint composite, différentes matières peuvent être utilisées pour la constitution des deux bagues du joint. La bague rigide peut être réalisée en matière thermoplastique, par exemple en polyamide ou en polytétrafluoréthylène. La bague élastique peut être en caoutchouc, notamment en caoutchouc synthétique tel que caoutchouc de nitrile, "Néoprène", "Viton", E.P.T., butyl, silicone.

Les évidements 7 à base en forme de losange peuvent également être orientés de manière que la grande diagonale des losanges soit perpendiculaire à l'axe du joint, notamment lorsque les mouvements relatifs des deux organes entre lesquels est monté le joint sont ou comprennent des mouvements de translation.

1. Joint d'étanchéité composite destiné à être monté entre un organe fixe et un organe mobile en translation et/ou en rotation par rapport à l'organe fixe, du type comprenant deux bagues coaxiales dont l'une, servant de bague d'étanchéité, réalisée en un matériau élastique déformable, est destinée à entrer en contact avec l'organe fixe, tandis que l'autre, formant bague de frottement, réalisée en un matériau rigide présentant un faible coefficient de frottement, est destinée à entrer en contact avec l'organe mobile, la surface de la bague rigide en contact avec la bague élastique présentant des évidements dans lesquels peut fluer le matériau élastique lors du serrage du joint, caractérisé par le fait que la surface de la bague rigide (6) en contact avec la bague élastique (5) présente des évidements (7) ayant une forme générale en fer de lance, avec une base en forme de losange et des saillies (9) sur les bords desdits évidements, la grande diagonale des losanges étant orientée perpendiculairement à la direction du mouvement relatif des deux organes entre lesquels est monté le joint.

2. Joint d'étanchéité suivant la revendication 1, caractérisé par le fait que les évidements (7) sont disposés en quinconce sur plusieurs lignes, laissant subsister deux marges latérales démunies d'évidements.

3. Joint d'étanchéité suivant la revendication 1 ou 2, caractérisé par le fait que la grande diagonale des losanges est parallèle à l'axe du joint.

4. Joint d'étanchéité suivant la revendication 1 ou 2, caractérisé par le fait que la grande diagonale des losanges est perpendiculaire à l'axe du joint.

5. Joint d'étanchéité suivant la revendication 3 ou 4, caractérisé par le fait que les évidements (7) présentent des rapports de dimensions tels que :

petite diagonale $<$ profondeur $<$ grande diagonale.

6. Joint d'étanchéité suivant la revendication 5, caractérisé par le fait que les évidements (7) présentent des rapports de dimensions tels que :

    petite diagonale = 0,5 x grande diagonale

    profondeur      = 0,75 x grande diagonale.

7. Joint d'étanchéité suivant la revendication 2, caractérisé par le fait que les évidements ont une base en forme de losange dont la grande diagonale est de l'ordre de 0,4 mm, la petite diagonale de l'ordre de 0,2 mm et la profondeur de l'ordre de 0,3 mm, et que la hauteur des saillies sur les bords des évidements varie entre environ 0,12 mm sur les côtés du losange et environ 0,08 mm aux pointes du losange.

FIG.1

FIG.2

FIG.3

FIG.4

0202439

1/1

**Office européen des brevets**

# RAPPORT DE RECHERCHE EUROPEENNE

Numero de la demande

EP 86 10 4500

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl 4) |
|---|---|---|---|
| Y,D | FR-A-2 138 311 (R. LEDUC)<br>* Page 2, lignes 30-32; figure 3 * | 1 | F 16 J 15/32 |
| Y | US-A-2 147 343 (HOKANSON)<br>* Page 2, colonne de gauche, lignes 29-46, ligne 65 - colonne de droite, ligne 2; figures 2-5,9 * | 1 | |
| A | | 3,4 | |

|  |
|---|
| DOMAINES TECHNIQUES RECHERCHES (Int. Cl.4) |
| F 16 J<br>F 16 B |

Le présent rapport de recherche a été établi pour toutes les revendications

| Lieu de la recherche | Date d'achèvement de la recherche | Examinateur |
|---|---|---|
| LA HAYE | 20-08-1986 | LEGER M.G.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 —

& : membre de la même famille, document correspondant

OEB Form 1503 03 82